# EUROPÄISCHE PATENTSCHRIFT

(11) **EP 4 134 595 B1**
(45) Veröffentlichungstag und Bekanntmachung des Hinweises auf die Patenterteilung: **02.04.2025**
(21) Anmeldenummer: 22188008.1
(22) Anmeldetag: 01.08.2022
(51) Int. Cl.: F24F 1/26, F24F 1/32, H02G 1/08, H02G 3/04, F16L 11/22

(54) **VERFAHREN ZUR HERSTELLUNG EINES LEITUNGSBÜNDELS, LEITUNGSBÜNDELROHLING SOWIE KLIMA- BZW. HEIZUNGSANLAGE**
METHOD FOR MANUFACTURING A CABLE BUNDLE, CABLE BUNDLE BLANK, AND AIR CONDITIONING AND / OR HEATING SYSTEM
PROCÉDÉ DE FABRICATION D'UN FAISCEAU DE CÂBLES, ÉBAUCHE DE FAISCEAU DE CÂBLES, AINSI QUE CLIMATISEUR OU INSTALLATION DE CHAUFFAGE

(30) Priorität: 11.08.2021 DE 102021120848
(43) Veröffentlichungstag der Anmeldung: 15.02.2023
(73) Patentinhaber: Vaillant GmbH, 42859 Remscheid (DE); Vaillant GmbH, 42859 Remscheid NRW (DE)
(72) Erfinder: Schlösser, Peter, 40237 Düsseldorf (DE); Sommer, Holger, 44388 Dortmund (DE)

(56) Entgegenhaltungen:
- EP-A1- 0 408 999
- DE-A1- 10 117 963
- KR-A- 20050 083 115
- KR-B1- 101 088 039
- KR-B1- 101 951 791
- US-A- 5 360 291
- US-A1- 2012 080 650
- US-A1- 2020 370 764
- US-A1- 2021 003 329

## Beschreibung

Die Erfindung betrifft ein Verfahren zur Herstellung eines Leitungsbündels, einen Leitungsbündelrohling sowie eine Klima- und/oder Heizungsanlage.

Klimaanlagen oder auch Wärmepumpen, insbesondere Split-Wärmepumpen, benötigen sowohl Kältemittelleitungen als auch zumindest eine elektrische Verbindung zwischen einem außerhalb des Gebäudes mit einem im Inneren des Gebäudes angeordneten Anlagenteil. In der Regel werden dabei die Kältemittelleitungen und die mindestens eine elektrische Leitung separat geführt. Dies hat einen hohen Montageaufwand zur Folge, insbesondere wenn mehrere Wanddurchbrüche notwendig sind. Weiterhin nachteilig kann nur schwer ein ausreichender Schutz der Leitungen gegen UV-Strahlung oder auch gegen andere äußere Einflüsse wie Vogel- oder Nagetierpick gewährleistet werden. Aufgrund der Lage der Anschlüsse für die Kältemittelleitungen und die elektrischen Anschlüsse müssen die elektrischen Leitungen in der Regel länger als die Kältemittelleitungen ausgeführt sein. Dieser Umstand erschwert eine gemeinsame Herstellung von Kältemittelleitung und elektrischer Leitung, da ein gemeinsames Ablängen eines Leitungsbündels nicht möglich ist.

In der KR101168713 B1 wird eine Leitung für eine Klimaanlage vorgeschlagen, aufweisend eine Hochdruck-Kältemittelleitung und eine Niedrigdruck-Kältemittelleitung mit einer thermischen Isolierung, und ein Kabelschutzrohr, die gemeinsam in einer beispielsweise aus einem Schrumpfschlauch gebildeten Umhausung angeordnet sind. Nachteilig kann auch eine hier vorgestellte Leitung die genannten Probleme bei der Herstellung eines Leitungsbündels nicht überwinden.

Auch die KR 1020100052136 A zeigt eine Kühlmittelleitung für eine Klimaanlage, bei der mindestens zwei Kältemittelleitungen und mindestens eine Signalleitung in einer Hülle angeordnet sind. Um die Biegsamkeit der Leitung zu verbessern und damit Lagerung und Transport zu erleichtern sind abschnittsweise Umhüllungen mit einer spiralförmigen Oberfläche vorgesehen. Auch diese Lösung kann die genannten Probleme bei der Herstellung nicht lösen.

Die KR 2005 0083115 A beschreibt die Herstellung eines Leitungsbündels für ein Klimagerät. Das Leitungsbündel umfasst dabei einen Leitungskern mit Aufnahmen bzw. Nuten, in die Kältemittelleitungen und elektrische Leitungen eingebracht werden. Anschließen kann der hergestellte Leitungsbündelrohling auf eine Spule aufgebracht werden und für die Installation auf die erforderliche Länge gebracht werden.

Die KR 101 951 791 B1 gibt eine Vorrichtung und ein Verfahren zur Herstellung eines Leitungsbündelrohlings, beispielsweise für eine Klimaanlage, an. Dabei wird die Wärmeisolation des Leitungsbündelrohlings verbessert.

Die EP 0 408 999 A1 bezieht sich auf ein Klimagerät, insbesondere ein transportables Klimagerät. Dieses kann eine Leitung zwischen einem Innen- und einem Außenteil umfassen, wobei eine Ausdehnungseinrichtung vorgesehen ist, die in einer flexiblen Verbindungseinrichtung angeordnet ist.

Auch der vorgenannte Stand der Technik vermag das Problem unterschiedlicher Längen von Kältemittelleitungen und elektrischen Leitungen nicht zu lösen.

Hiervon ausgehend ist es Aufgabe der Erfindung, ein Verfahren zur Herstellung eines Leitungsbündels vorzuschlagen, das die geschilderten Probleme des Standes der Technik zumindest teilweise überwindet. Insbesondere soll das vorzuschlagende Verfahren die Herstellung eines Leitungsbündels erheblich vereinfachen, wobei das herzustellende Leitungsbündel gut gegen äußere Einflüsse geschützt sein soll. Auch soll ein installationsbereites Leitungsbündel geschaffen werden, bei dem die Länge der Kältemittelleitungen unabhängig von der Länge des/ der elektrischen Kabel wählbar ist. Zudem soll das durchzuführende Verfahren kostengünstig und ohne hohen technischen Aufwand durchführbar sein. Zudem sollen besondere Anwendungsgebiete des Verfahrensproduktes angegeben werden.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur Herstellung eines Leitungsbündels mit einem Leitungsbündelrohling und mindestens einem elektrischen Kabel, bei, umfassend zumindest die folgenden Schritte:
a) Bereitstellen eines Leitungsbündelrohlings mit einer vorgegebenen Länge, umfassend zumindest eine Kältemittelleitung, die eine Hochdruckkältemittelleitung ist, und ein Mittel zur Durchführung zumindest eines elektrischen Kabels,
b) Bereitstellen mindestens eines elektrischen Kabels mit einer vorgegebenen Länge, die länger als die vorgegebene Länge des Leitungsbündelrohlings ist,
c) Durchführen des mindestens einen elektrischen Kabels durch den in Schritt a) bereitgestellte Leitungsbündelrohling mit dem Mittel zur Durchführung,
d) wobei das mindestens eine elektrischen Kabel derart relativ zu dem Leitungsbündelrohling positioniert wird, dass ein Überstand des mindestens einen elektrischen Kabels an einem oder beiden Enden des Leitungsbündels eingestellt wird.

Die Schritte a), b) und c) werden bei einer regulären Verfahrensdurchführung mindestens einmal in der angegebenen Reihenfolge durchgeführt. Alternativ auch Schritt b) zeitlich vor Schritt a) oder die Schritte a) und b) parallel oder zeitgleich durchgeführt werden.

Das Verfahren dient insbesondere zur Herstellung eines Leitungsbündels für eine Klima- oder Heizungsanlage, wobei das Leitungsbündel mindestens eine Kältemittelleitung umfassen kann, nämlich eine Hochdruckkältemittelleitung. Eine Hochdruckkältemittelleitung kann insbesondere dazu eingerichtet sein, kondensiertes Kältemittel in flüssiger Phase zu transportieren. Die Kältemittelleitungen können eine thermische Isolation in Form einer Ummantelung aufweisen und beispielsweise als Kupferrohr ausgebildet sein. Ein herzustellendes Leitungsbündel kann insbesondere für eine Klima- und/ oder Heizungsanlage geeignet sein, umfassend eine Wärmepumpe, beispielsweise eine Split-Wärmepumpe.

Gemäß einem Schritt a) erfolgt ein Bereitstellen eines Leitungsbündelrohlings in gewünschter Länge, umfassend zumindest eine Kältemittelleitung und ein Mittel zur Durchführung zumindest eines elektrischen Kabels. Der Leitungsbündelrohling kann beispielsweise von einer Rolle abgewickelt und in gewünschter Länge abgetrennt werden. Die vorgebbare bzw. gewünschte Länge kann der erforderlichen Länge für eine Verbindung von äußerem Anlageteil und innerem Anlageteil der Klima- bzw. der Heizungsanlage entsprechen.

Gemäß einem Schritt b) erfolgt ein Bereitstellen mindestens eines elektrischen Kabels in gewünschter Länge. In vorteilhafter Weise kann die Länge des elektrischen Kabels unabhängig von der und länger als die Länge des Leitungsbündelrohlings gewählt werden. Ein elektrisches Kabel kann eine elektrisch leitfähige Verbindung herstellen, wobei diese elektrische Verbindung beispielsweise eine Spannungsversorgung oder auch eine Datenverbindung gewährleisten kann.

Gemäß einem Schritt c) erfolgt ein Durchführen des in Schritt b) bereitgestellten mindestens einen elektrischen Kabels durch den in Schritt a) bereitgestellten Leitungsbündelrohling mit dem Mittel zur Durchführung eines elektrischen Kabels. Somit kann in Schritt c) das in Schritt b) bereitgestellte mindestens eine elektrische Kabel in den Leitungsbündelrohling integriert werden. Vorteilhaft kann auf einfache Art und Weise ein installationsbereites Leitungsbündel geschaffen werden, wobei die Länge der Kältemittelleitungen unabhängig von der Länge des/ der elektrischen Kabel wählbar ist.

Gemäß Schritt d) erfolgt weiter ein Positionieren des mindestens einen elektrischen Kabels relativ zu den Kältemittelleitungen und dem Mittel zur Durchführung. Das Positionieren erfolgt derart, dass das mindestens eine elektrische Kabel relativ zum Leitungsbündelrohling bewegt wird, und dass ein gewünschter Überstand des mindestens einen elektrischen Kabels an einem oder beiden Enden des Leitungsbündels eingestellt wird. Durch ein Positionieren des mindestens einen elektrischen Kabels kann beispielsweise ein erforderlicher längerer Überstand des mindestens einen elektrischen Kabels am inneren Anlagenteil als auch beim äußeren Anlagenteil (oder umgekehrt) eingestellt werden.

Gemäß einer weiteren vorteilhaften Ausgestaltung kann ein Positionieren eines elektrischen Kabels, beispielsweise eines Datenkabels, relativ zu einem anderen elektrischen Kabel, beispielsweise einer Spannungsversorgung, erreicht werden. In vorteilhafter Weise kann so einem abweichenden Abstand der Kontaktstellen für ein Datenkabel und die Spannungsversorgung zum Anschlusspunkt der Kältemittelleitungen entsprochen werden.

Gemäß einer vorteilhaften Ausgestaltung kann in Schritt c) das Durchführen des mindestens einen elektrischen Kabels durch eine in Längsrichtung des Leitungsbündelrohlings ausgebildete Kavität als Mittel zur Durchführung erfolgen. Die in Längsrichtung des Leitungsbündelrohlings ausgebildete Kavität kann beispielsweise mittels eines Leerrohres geschaffen werden, das in den Leitungsbündelrohling integriert ist. Das Leerrohr kann als Kunststoffrohr ausgeführt sein und eine Querschnittsfläche aufweisen, die ausreichend ist, um das/ die gemäß Schritt b) bereitgestellten elektrischen Kabel aufzunehmen. Für ein Durchführen des/ der elektrischen Kabel gemäß Schritt c) kann in einem einfachen Fall das mindestens eine elektrische Kabel durch das Leerrohr geschoben werden.

Gemäß einer vorteilhaften Ausgestaltung kann in Schritt c) das Durchführen des mindestens einen elektrischen Kabels durch eine Ziehseele als Mittel zur Durchführung erfolgen. Eine Ziehseele ist im Sinne dieser Schrift ein in Längsrichtung des Leitungsbündelrohlings ausgebildetes Element sein, dass mit dem Leitungsbündelrohling verbunden und insbesondere in einer Umhüllung eines Leitungsbündelrohlings angeordnet sein kann. Nach einem Bereitstellen des Leitungsbündelrohlings in gewünschter Länge gemäß Schritt a) kann mindestens ein gemäß Schritt b) in gewünschter Länge bereitgestelltes elektrisches Kabel mit einem Ende der Ziehseele verbunden werden und anschließend, durch aufbringen einer Zugkraft am anderen Ende der Ziehseele, durch den Leitungsbündelrohling gezogen und so in diesen eingebracht/ integriert werden.

Gemäß einer vorteilhaften Ausgestaltung kann in Schritt c) mindestens ein elektrisches Kabel durch das in Schritt a) bereitgestellte Leitungsbündel durchgeführt werden, wobei das mindestens eine elektrische Kabel ein Datenkabel umfasst. Das Datenkabel kann beispielsweise ein eBus-Kabel sein. Gemäß einer weiteren vorteilhaften Ausgestaltung kann das mindestens eine elektrische Kabel ein Kabel zur Spannungsversorgung umfassen.

Gemäß einer vorteilhaften Ausgestaltung kann der in Schritt a) bereitzustellende Leitungsbündelrohling mittels Kleben verbunden sein. Beispielsweise kann eine in Längsrichtung des Leitungsbündelrohlings ausgebildete Kavität so in vorteilhaft einfacher Weise mit der mindestens einen Kältemittelleitung verbunden sein. Als Klebstoff kann beispielsweise ein Kunststoff eingesetzt werden.

Gemäß einer vorteilhaften Ausgestaltung kann der in Schritt a) bereitgestellte Leitungsbündelrohling eine Umhüllung aufweisen. Die Umhüllung kann beispielsweise ein Schrumpfschlauch sein, also ein thermoplastischer Schlauch, der sich durch Hitzeeinwirkung radial zusammenzieht. Im Rahmen der Herstellung des in Schritt a) bereitzustellenden Leitungsbündelrohlings kann die mindestens eine Kältemittelleitung und ein Mittel zur Durchführung eines elektrischen Kabels in einen Schrumpfschlauch eingeführt werden und durch Hitzeeinwirkung der Querschnitt des Schrumpfschlauches gemindert werden, so dass ein kompakter Leitungsbündelrohling entsteht. In vorteilhafter Weise kann eine Umhüllung gut vor äußeren Einflüssen wie einer Beanspruchung durch Nagetiere oder Vögel oder auch durch UV-Strahlung schützen. ergänzen.

Nach einem weiteren Aspekt wird auch eine Klima- und/oder Heizungsanlage umfassend ein hier vorgestelltes Leitungsbündel vorgeschlagen. Die Klima- und/oder Heizungsanlage kann einen inneren (beispielsweise in einem Gebäude angeordneten) und einen äußeren Anlagenteil aufweisen.

Nach einem weiteren Aspekt wird ein Leitungsbündelrohling, umfassend mindestens eine Kältemittelleitung, die eine Hochdruckkältemittelleitung ist, und eine, in Längsrichtung des Leitungsbündelrohlings ausgebildete, Kavität und eine durch Kavität ziehbare Ziehseele als Mittel zur Durchführung mindestens eines elektrischen Kabels vorgeschlagen.

Gemäß einer vorteilhaften Ausgestaltung kann der Leitungsbündelrohling eine Umhüllung aufweisen. Die Umhüllung kann beispielsweise ein Kunststoffüberzug oder ein Schrumpfschlauch sein.

Hier werden somit ein Verfahren zur Herstellung eines Leitungsbündels, eine Klima- und/ oder Heizungsanlage und ein Leitungsbündelrohling angegeben, welche die mit Bezug auf den Stand der Technik geschilderten Probleme zumindest teilweise lösen. Insbesondere tragen das Verfahren, die Klima und/ oder Heizungsanlage sowie der Leitungsbündelrohling jeweils zumindest dazu bei, die Herstellung eines Leitungsbündels für eine Klima- und/ oder Heizungsanlage wesentlich zu vereinfachen. Zudem ermöglicht die Durchführung eines hier vorgeschlagenen Verfahrens ein schnelles und exaktes Positionieren eines oder mehrerer elektrischer Kabel, so dass Überstände der elektrischen Kabel zum Leitungsbündelrohling exakt einstellbar sind.

Die im Zusammenhang mit dem Verfahren erörterten Details, Merkmale und vorteilhaften Ausgestaltungen können entsprechend auch bei der hier vorgeschlagenen Klima- und/ oder Heizungsanlage und/oder dem Leitungsbündelrohling auftreten und umgekehrt. Insoweit wird auf die dortigen Ausführungen zur näheren Charakterisierung der Merkmale ausdrücklich Bezug genommen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: einen Ablauf eines hier vorgeschlagenen Verfahrens,
- Fig. 2:: eine Schnittdarstellung eines ersten Leitungsbündelrohlings
- Fig. 3:: eine Schnittdarstellung eines zweiten Leitungsbündelrohlings, und
- Fig. 4:: eine hier vorgeschlagene Klima- und/ oder Heizungsanlage.

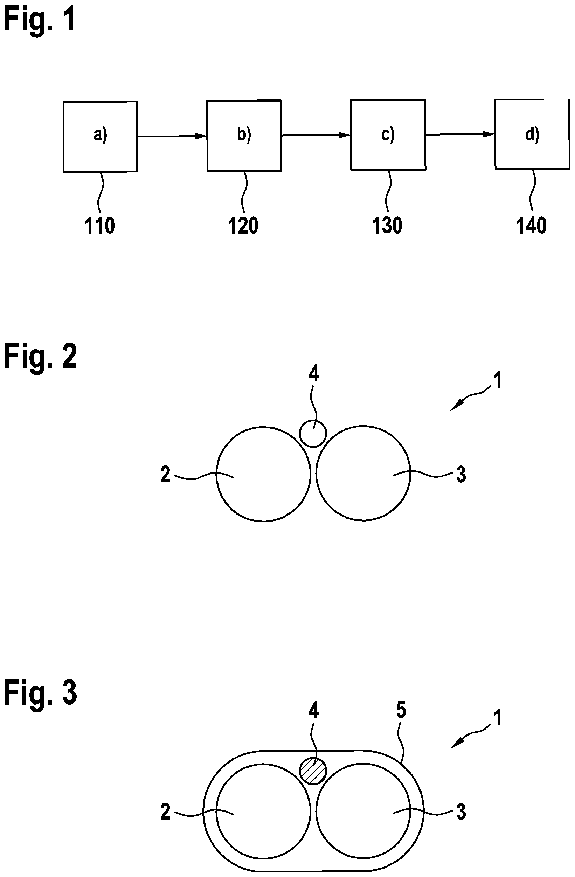

Fig. 1 zeigt beispielhaft und schematisch den Ablauf eines hier vorgeschlagenen Verfahrens. Das Verfahren dient zur Herstellung eines Leitungsbündels 8, insbesondere für eine Heiz- oder Klimaanlage, beispielsweise zu Verbindung eines inneren Anlagenteils 14 mit einem äußeren Anlagenteil 13, wobei ein gemäß dem hier vorgeschlagenen Verfahren vorgeschlagenes Leitungsbündel 8 mindestens eine Kältemittelleitung 2, 3 und mindestens ein elektrisches Kabel 15 umfassen kann. Die in Figur 1 mit Blöcken 110, 120, 130 und 140 dargestellte Reihenfolge der Verfahrensschritte a), b), c) und d) kann sich bei einem regulären Verfahrensablauf einstellen.

In Block 110 erfolgt gemäß Schritt a) ein Bereitstellen eines Leitungsbündelrohlings 1 umfassend zumindest eine Kältemittelleitung 2,3 und mindestens ein Mittel zur Durchführung 4 zumindest eines elektrischen Kabels 15 in gewünschter Länge.

In Block 120 erfolgt gemäß Schritt b) ein Bereitstellen mindestens eines elektrischen Kabels 15 in gewünschter Länge,

In Block 130 erfolgt gemäß Schritt c) ein Durchführen des mindestens einen elektrischen Kabels 15 durch den in Schritt a) bereitgestellte Leitungsbündelrohling 1 durch das Mittel zur Durchführung 4 eines elektrischen Kabels 15.

In Block 140 erfolgt gemäß einem Schritt d) ein Positionieren eines elektrischen Kabels 15 relativ zum Leitungsbündelrohling 1.

Fig. 2 zeigt beispielhaft und schematisch einen gemäß Schritt a) (Block 110) bereitzustellenden Leitungsbündelrohlings 1. Dieser kann zwei Kältemittelleitungen 2, 3 umfassen, die eine thermische Isolation in Form einer Ummantelung aufweisen. Mit den Kältemittelleitungen 2, 3 bzw. deren Ummantelung kann ein Mittel zur Durchführung 4 eines elektrischen Kabels 15 verbunden sein. Die Verbindung zwischen den Kältemittelleitungen 2, 3 bzw. deren Ummantelung und dem Mittel zur Durchführung 4 kann mittels Kleben erfolgen. Das Mittel zur Durchführung 4 kann ein Leerrohr, beispielsweise aus Kunststoff sein.

Fig. 3 zeigt beispielhaft und schematisch eine alternative Ausgestaltung eines gemäß Schritt a) (Block 110) bereitzustellenden Leitungsbündelrohlings 1. Gemäß Figur 3 kann der Leitungsbündelrohling 1 eine Umhüllung 5, beispielsweise in Form eines Schrumpfschlauches umfassen. Innerhalb der Umhüllung 5 können einer erste Kältemittelleitung 2, eine zweite Kältemittelleitung 3 und ein Mittel zur Durchführung eines elektrischen Kabels 4, welches gemäß Figur 3 als Ziehseele ausgebildet sein kann. Die Ziehseele kann beispielsweise ein Stahlseil sein.

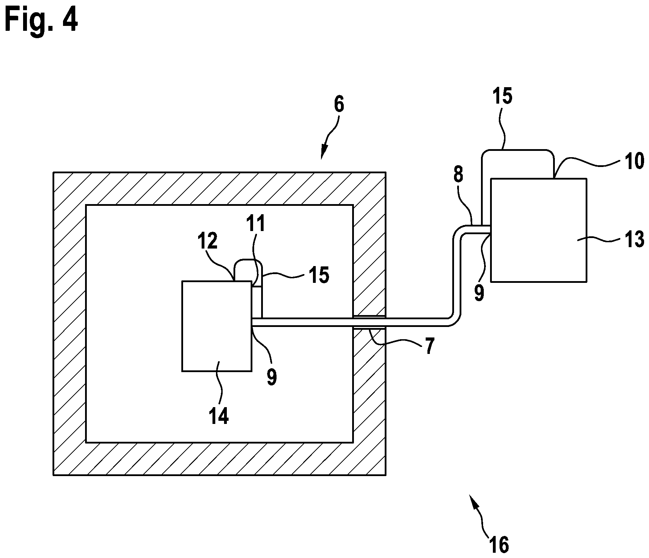

Fig. 4 zeigt beispielhaft und schematisch eine hier vorgeschlagene Klima- und/ oder Heizungsanlage 16, die einen äußeren Anlagenteil 13 und einen inneren Anlagenteil 14 einer Wärmepumpe umfassen kann. Äußerer Anlagenteil 13 und innerer Anlagenteil 14 können durch ein, mittels Durchführung eines hier vorgeschlagenen Verfahrens hergestelltes, Leitungsbündels 8 verbunden sein. Der innere Anlagenteil 14 kann in einem Gebäude 6 angeordnet und das Leitungsbündel 8 kann durch einen Wanddurchbruch 7 ins Gebäude 6 geführt sein.

Das Leitungsbündel 8 kann beispielhaft eine erste Kältemittelleitung 2 und eine zweite Kältemittelleitung 3 sowie zwei elektrische Kabel 15 bündeln. Die beiden elektrischen Kabel 15 können beispielsweise eine Spannungsversorgung für den äußeren Anlagenteil 13 und ein Datenkabel, wie ein eBus-Kabel sein. Gemäß Schritt a) (Block 110) eines hier vorgeschlagenen Verfahrens kann ein Leitungsbündelrohling 1 in entsprechender Länge für eine Verbindung von einem Anschlusspunkt 9 am äußerem Anlagenteil 13 und einem Anschlusspunkt 9 am innerem Anlagenteil 14 bereitgestellt werden. Gemäß einem Schritt b) können die beiden elektrischen Kabel 15 in gewünschter Länge bereitgestellt werden. Durch unterschiedliche Abstände vom Anschlusspunkt 9 der Kältemittelleitungen 2,3 zu einem Anschlusspunkt Datenkabel 12 und einem Anschlusspunkt Spannungsversorgung 11 können Datenkabel und Spannungsversorgung vorteilhaft gemäß Schritt b) (Block 120) in unterschiedlichen Längen bereitgestellt werden. Gemäß einem Schritt d) (Block 140) können Datenkabel und Spannungsversorgung relativ zum Leitungsbündelrohling 1 derart positioniert werden, dass beispielsweise am inneren Anlagenteil 14 das Datenkabel einen größeren Überstand gegenüber dem Leitungsbündelrohling 1 aufweisen kann, um den Abstand vom Anschlusspunkt Spannungsversorgung 11 zum Anschlusspunkt Datenkabel 12 überbrücken zu können.

Am äußeren Anlagenteil 13 können Datenkabel und Spannungsversorgung an einem gemeinsamen Anschlusspunkt elektrische Kabel 10 angeschlossen sein und so den gleichen Überstand gegenüber dem Leitungsbündelrohling 1 aufweisen.

### Bezugszeichenliste

- 1: Leitungsbündelrohling
- 2: erste Kältemittelleitung
- 3: zweite Kältemittelleitung
- 4: Mittel zur Durchführung
- 5: Umhüllung
- 6: Gebäude
- 7: Wanddurchbruch
- 8: Leitungsbündel
- 9: Anschlusspunkt Kältemittelleitung
- 10: Anschlusspunkt elektrische Kabel
- 11: Anschlusspunkt Spannungsversorgung
- 12: Anschlusspunkt Datenkabel
- 13: äußerer Anlagenteil
- 14: innerer Anlagenteil
- 15: elektrisches Kabel
- 16: Klimaanlage, Heizungsanlage

## Patentansprüche

1. Verfahren zur Herstellung eines Leitungsbündels (8) mit einem Leitungsbündelrohling (1) und mindestens einem elektrischen Kabel (15), umfassend zumindest die folgenden Schritte:
a) Bereitstellen eines Leitungsbündelrohlings (1) mit einer vorgegebenen Länge, umfassend zumindest eine Kältemittelleitung (2,3), die eine Hochdruckkältemittelleitung ist, und mindestens ein Mittel zur Durchführung (4) zumindest eines elektrischen Kabels (15),
b) Bereitstellen mindestens eines elektrischen Kabels (15) mit einer vorgegebenen Länge, die länger als die vorgegebene Länge des Leitungsbündelrohlings (1) ist,
c) Durchführen des mindestens einen elektrischen Kabels (15) durch den in Schritt a) bereitgestellte Leitungsbündelrohling (1) mit dem Mittel zur Durchführung (4),
d) wobei das mindestens eine elektrischen Kabel (15) derart relativ zu dem Leitungsbündelrohling (1) positioniert wird, dass ein Überstand des mindestens einen elektrischen Kabels (15) an einem oder beiden Enden des Leitungsbündels (8) eingestellt wird.

2. Verfahren nach Anspruch 1, wobei in Schritt c) das Durchführen des mindestens einen elektrischen Kabels (15) durch eine in Längsrichtung des Leitungsbündelrohlings (1) ausgebildete Kavität als Mittel zur Durchführung (4) erfolgt.

3. Verfahren nach Anspruch 1, wobei in Schritt c) das Durchführen des mindestens einen elektrischen Kabels (15) mittels einer Ziehseele als Mittel zur Durchführung (4) erfolgt.

4. Verfahren nach einem der vorangehenden Ansprüche, wobei der in Schritt a) bereitzustellende Leitungsbündelrohling (1) mittels Kleben verbunden ist.

5. Verfahren nach Anspruch 4, wobei der in Schritt a) bereitzustellende Leitungsbündelrohling (1) durch einen flüssigen Kunststoff verklebt wurde.

6. Verfahren nach einem der vorangehenden Ansprüche, wobei in Schritt c) mindestens ein elektrisches Kabel (15) durch den in Schritt a) bereitgestellten Leitungsbündelrohling (1) durchgeführt wird und das mindestens eine elektrische Kabel (15) ein Datenkabel und/oder eine Spannungsversorgung umfasst.

7. Verfahren nach einem der vorangehenden Ansprüche, wobei der in Schritt a) bereitgestellte Leitungsbündelrohling (1) eine Umhüllung (5) aufweist.

8. Klima- und/ oder Heizungsanlage (16), umfassend wenigstens ein Leitungsbündel (8) hergestellt nach einem der vorangehenden Ansprüche.

## Claims

1. Method for manufacturing a cable bundle (8) with a cable bundle blank (1) and at least one electrical cable (15), comprising at least the following steps:
a) providing a cable bundle blank (1) with a predefined length, comprising at least one refrigerant line (2, 3), which is a high-pressure refrigerant line, and at least one means for guiding through (4) at least one electrical cable (15),
b) providing at least one electrical cable (15) with a predefined length, which is longer than the predefined length of the cable bundle blank (1),
c) guiding the at least one electrical cable (15) through the cable bundle blank (1) provided in step a) with the means for guiding through (4),
d) wherein the at least one electrical cable (15) is positioned relative to the cable bundle blank (1) such that a protrusion of the at least one electrical cable (15) is set at one or both ends of the cable bundle (8).

2. Method according to claim 1, wherein in step c) the at least one electrical cable (15) is guided through a cavity formed in the longitudinal direction of the cable bundle blank (1) as a means for guiding through (4).

3. Method according to claim 1, wherein in step c) the at least one electrical cable (15) is guided through by means of a drawing core as the means for guiding through (4).

4. Method according to any one of the preceding claims, wherein the cable bundle blank (1) to be provided in step a) is connected by means of gluing.

5. Method according to claim 4, wherein the cable bundle- blank (1) to be provided in step a) has been glued by a liquid plastic.

6. Method according to any one of the preceding claims, wherein in step c) at least one electrical cable (15) is guided through the cable bundle blank (1) provided in step a) and the at least one electrical cable (15) comprises a data cable and/or a power supply.

7. Method according to any one of the preceding claims, wherein the cable bundle blank (1) provided in step a) comprises a sheath (5).

8. Air conditioning and/or heating system (16), comprising at least one cable bundle (8) manufactured according to any one of the preceding claims.

## Revendications

1. Procédé de fabrication d'un faisceau de conduites (8) avec une ébauche de faisceau de conduites (1) et au moins un câble électrique (15), comprenant au moins les étapes suivantes :
a) fournir une ébauche de faisceau de conduites (1) avec une longueur prédéterminée, comprenant au moins une conduite de réfrigérant (2, 3), qui est une conduite de réfrigérant à haute pression, et au moins un moyen de passage (4) d'au moins un câble électrique (15),
b) fournir au moins un câble électrique (15) avec une longueur prédéterminée, qui est plus longue que la longueur prédéterminée de l'ébauche de faisceau de conduites (1),
c) faire passer le au moins un câble électrique (15) à travers l'ébauche de faisceau de conduites (1) fournie à l'étape a) avec le moyen de passage (4),
d) dans lequel le au moins un câble électrique (15) est positionné par rapport à l'ébauche de faisceau de conduites (1) de sorte qu'une saillie du au moins un câble électrique (15) soit définie à une ou aux deux extrémités du faisceau de conduites (8).

2. Procédé selon la revendication 1, dans lequel, à l'étape c), le passage du au moins un câble électrique (15) s'effectue à travers une cavité réalisée en direction longitudinale de l'ébauche de faisceau de conduites (1) en tant que moyen de passage (4).

3. Procédé selon la revendication 1, dans lequel, à l'étape c), le passage du au moins un câble électrique (15) s'effectue au moyen d'une âme de tirage en tant que moyen de passage (4).

4. Procédé selon l'une quelconque des revendications précédentes, dans lequel l'ébauche de faisceau de conduites (1) à fournir à l'étape a) est reliée par collage.

5. Procédé selon la revendication 4, dans lequel l'ébauche de faisceau de conduites (1) à fournir à l'étape a) a été collée par une matière plastique liquide.

6. Procédé selon l'une quelconque des revendications précédentes, dans lequel, à l'étape c), au moins un câble électrique (15) est passé à travers l'ébauche de faisceau de conduites (1) à fournir à l'étape a), et le au moins un câble électrique (15) comprend un câble de données et/ou une alimentation en tension.

7. Procédé selon l'une quelconque des revendications précédentes, dans lequel l'ébauche de faisceau de conduites (1) fournie à l'étape a) présente une enveloppe (5).

8. Installation de climatisation et/ou de chauffage (16), comprenant au moins un faisceau de conduites (8) fabriqué selon l'une quelconque des revendications précédentes.
